# EUROPEAN PATENT SPECIFICATION

(11) **EP 2 194 266 B1**
(45) Date of publication and mention of the grant of the patent: **16.05.2012**
(21) Application number: 08021303.6
(22) Date of filing: 08.12.2008
(51) Int. Cl.: F03D 1/04, F03D 1/06

(54) **Horizontal axis wind turbine**
Windkraftanlage mit horizontaler Achse
Eolienne à axe horizontal

(43) Date of publication of application: 09.06.2010
(73) Proprietor: Siemens Aktiengesellschaft, 80333 München (DE)
(72) Inventor: Hjort, Søren, 7330 Brande (DK)

(56) References cited:
- DE-A1- 2 935 803
- DE-A1- 3 047 501
- DE-A1- 3 919 157
- DE-A1- 10 208 561
- FR-A- 547 884
- FR-A1- 2 295 256
- FR-A1- 2 487 440
- FR-A1- 2 793 528
- FR-A1- 2 869 068
- US-A- 4 159 191

## Description

### Field of invention

The present invention relates to a horizontal axis wind turbine.

### Art Background

In the field of power generation by wind turbines there may be a need to improve the efficiency of generating electrical power. In conventional wind turbines, until now the common design for such power generating turbines is a bare rotor type design, characterized by a rotating rotor that is rotatable around a horizontal axis due to wind power.

Conventional types of such power generating turbines of the bare rotor type are horizontal axis wind turbines (HAWT) and vertical axis wind turbines (VAWT). The horizontal axis wind turbines provide the horizontal rotating axis around which the blades of the wind turbine rotate. In vertical axis wind turbines, a rotary axis of the blade is provided in a vertical direction. Examples for a vertical axis wind turbine may be for instance a so-called Darrieus wind turbine.

Furthermore, in the field of wind turbines, it is known to use power-augmenting devices that lead to an increase of a flow rate through the rotor device. Such power-augmenting devices may be for instance shrouds or diffusers. The turbine power-augmenting devices may increase an efficiency (energy yield per rotor area) by a factor around 2 - 4.

Wind turbines, in particular horizontal axis wind turbines, combined with a diffuser may be called diffuser augmented wind turbines (DAWT). Such diffuser augmented wind turbines comprise a diffuser that forms a duct in which the turbine rotor, in particular a horizontal axis wind turbine, is located. The diffuser duct may guide a wind flowing to the turbine and thereby increases the velocity and decreases pressure. The flow boundaries are defined by the diffuser duct and a stream line expansion is limited by the duct geometry.

By using the diffuser, fluid may be guided through the wind turbine and an increase of an available pressure drop across the turbine rotor may be provided. Turbulences in the wake of the rotor may be reduced due to the flow acceleration. The documents DE 2 935 803, FR 2 793 528, FR 2869068, FR 2 487 440 and FR 547884 disclose horizontal axis wind turbines according to the state of the art.

### Summary of the Invention

It may be an object of the present invention to provide a proper and efficient wind turbine.

The object is met by the subject-matter according to independent claim 1 defining a horizontal axis wind turbine.

According to a first embodiment of the present invention, a horizontal axis wind turbine comprising a rotor blade is provided. The rotor blade comprises a fixing section for fixing the rotor blade to a rotary shaft of a rotor of the horizontal axis wind turbine. Moreover, the rotor blade comprises a geometrically adjusted section with a root end. A section of the root end of the geometrically adjusted section and a section of a guide panel of a stator of the horizontal axis wind turbine closest to the root end are substantially coplanar.

Under the term "horizontal axis wind turbine" (HAWT) a wind turbine may be described that provides a rotary shaft that is aligned substantially in a horizontal direction. To the rotary shaft the rotor blades may be attached and may extend along an extending direction to the root end. A power generation device may be attached to the rotary shaft, wherein the power generation device transforms the rotary energy of the rotary shaft in electrical power.

A rotor of a wind turbine may be the movable part of a turbine wherein the stator may be a non-movable part of a turbine that acts as a guiding element for a fluid flow. A stator may be for example a diffuser or a duct inside of which the rotor may be attached, for example. The stator may provide guide panels. Along the guide panels the fluid (wind) may flow, e.g. in a laminar condition. The stator and its stator elements are in particular not movable in contrary to the rotor elements.

Under the term "rotor blade" a blade with a streaming profile with a pressure side on a luff side (the side, where the fluid (wind) comes from) of the rotor and a suction side (lower pressure of the fluid than at the pressure side) on the lee side (the side, to where there the fluid streams after passing the rotor from the pressure side) of the rotor may be described. The blade profile may be formed like a wing profile of an airfoil. The fluid (wind) that streams against the rotor blade may transmit mechanical energy to the rotor blade. The mechanical energy may generate a lift force. The rotor blades in wind turbines may act as a repeller, i.e. the blade elements convert a wind power of a fluid into mechanical motion.

The rotor blade may comprise a fixing section that may be a reinforced part of the blade and with which the rotor blade may be fixed to the rotary shaft of the rotor.

The "geometrically adjusted section" may be a section that is adjustable during its production process or adjustable by a wind (fluid) force acting on the geometrically adjusted section. The geometrically adjusted section may extend along the longitudinal axis of the rotor blade, i.e. the geometrically adjusted section may extend along an extending direction, wherein the extending direction may be defined as the direction from the fixing section of the rotor blade to the root end. The section of the root end may be a part of the geometrically adjusted section that defines a plane that is parallel to the extending direction. The guide panel may define a further extending direction, wherein the extending direction may be substantially parallel to the rotary shaft. The section of the guide panel closest to the root end may define a plane that is parallel to the extending direction of the guide panel. The section at the root end is adjusted to the plane of the guide panel of the stator, so that the plane of the section of the root end is substantially parallel and coplanar to the plane of the section of the guide panel for forming a geometric continuous transition of the flow or the bound vorticity.

Therefore, the geometrically adjusted section may be bent and may provide a curved shape along its extending direction, for example. I.e., the geometrically adjusted section may be bent in such a way, that at a first end of the geometrically adjusted section the blade may e.g. extends in a vertical direction wherein at the section of the root end of the geometrically adjusted section may be aligned (along its extending direction) to a plane of the guide panel, e.g. a horizontal plane.

In bare rotor turbines, the fluid flows along a flow direction from an upstream position (luff side) of the rotor to a downstream (lee side) position of the rotor. In rotor-stator turbines, the fluid flow is contracted through the rotor by the stator and expands later after leaving the stator. The energy that may be harvested from the wind (fluid) is proportional to the upstream area (Luff side of the rotor), where the streamlines start in a non-contracted state. For the conventional bare rotor type turbine, the upstream area of the fluid flow is smaller than the area of the rotor due to the flow expansion at the rotor. For the rotor-stator turbine the upstream area of the fluid flow upstream of the rotor is larger than the rotor area at the rotor due to the flow contraction generated by the diffuser (stator). The flow contraction is generated because the stator maintains a pressure difference between an upstream position and a downstream position of the rotor and the stator keeps the pressure difference along the extending direction of the stator. This generates a suction that accelerates the flow and contracts it. The final expansion of the flow at the end of the stator in a more downstream position is inevitable, but is delayed to further downstream.

In conventional diffuser augmented wind turbines the diffuser (stator) or the shrouds enshrouds the whole rotor in such a way, that the diffuser guides fluid from the luff side of the rotor to the lee side of the rotor. Thus, the stator respectively the diffuser guides the incoming fluid already upstream of the fluid on the luff side of the rotor to the lee side of the rotor. Thereby, in the region where the rotor blades are mounted into the stator, the highest velocity and the highest pressure is provided, without any influence of the rotor. With other words, the flow rate speed up through the rotor relies first of all on the incoming fluid inside the diffuser. Furthermore, the conventional diffuser begins to guide the fluid already before at the luff side (upstream) of the rotor, so that the functionality of the diffuser as such is independent of the presence of the rotor and consequently a flow rate speed up through the rotor is always present, also when it is inconvenient due to e.g. high structure loads, e.g. at wind forces beyond the turbine cut out wind speed.

With the present invention, the rotor blades are formed to provide a geometrical continuation, in particular a geometrical continuous transition to a panel of a stator. I.e. the geometrically adjusted section of the rotor blade is formed in such a way that a geometrical continuous transition is provided, i.e. that a fluid flow flows constant along the extending direction from the rotor blade to the guide panel. I.e. when the guide panels are located at the lee side of the rotor, the stator becomes an integrated part of the turbine functionality and not, such as conventional diffusers, a separate device that will generate a fluid guidance independently of the rotor. With other words, the flow rate augmentation through the stator and through the rotor is primarily dependent on the rotor rotational velocity which is fully controllable. Thus, a structural load control may be provided when controlling the flow rate augmentation by controlling the rotation of the rotor blade.

According to a further exemplary embodiment of the present invention, the geometrically adjusted section is geometrically adjustable for forming a geometrical continuous transition to a guide panel of a stator of the horizontal axis wind turbine, so that bound vorticity generated by the rotation of the rotor blade is transferrable to the guide panel.

The term "geometrical continuous transition" defines a continuous transmission of the fluid flow, in particular the bound vorticity, from the root end of the rotor blade to the guide panel. With other words, when a fluid flows from the root end of the rotor blade further to the guide panel, turbulence in the flow of the fluid may be prevented when the geometrically adjusted section forms the geometrical continuous transition. I.e. an incontinuous transition may occur when the fluid would flow from the rotor blade to the guide panel in such a way that a turbulent fluid flow may be generated and a part of the fluid would flow upstream, i.e. to the luff side of the rotor blade, which would lead to a loss of efficiency.

The geometrical continuous transition may be achieved by an angle between a plane of the section of the root end and a plane of the guide panel other than 90°. The continuation angle may be defined by an angle between the plane of the geometrically adjusted section at the root end and the plane of the guide panel at a section of the guide panel closest to the root end. With other words, the continuation angle may be in particular 0° (degree) when the plane of the section of the root end is parallel and coplanar to a plane of the guide panel. Moreover, the geometric continuation may be improved if a distance from the rotary shaft of the root end and the edge of the guide panel closest to the root end is similar. In comparison to conventional wind turbines, the rotor blade at the root end provides a geometric continuation angle of 90° with the inner surface of a diffuser, because the plane of the rotor blade along its extending direction is perpendicular to a plane of the diffuser along its extending direction.

In particular the angle may be in the range between 0° and ±10° or between ±10° ± 20° (degree) for forming the geometrical continuous transition.

According to a further exemplary embodiment, the rotor blade further comprises a blade section that is located between the fixing section and the geometrically adjusted section. A plane of the blade section may be perpendicular to a plane of the guide panel. The geometrical adjusted section may be attached to the blade section of the rotor blade and may extend to the root end of the rotor blade. The geometrically adjusted section may be attached to a blade section of the rotor blade like a winglet to a wing of an airfoil.

According to a further exemplary embodiment, the blade section and the geometrically adjusted section comprise a different elastic material. Thus, when a rotor blade is exposed to wind, either the blade section or the geometrically adjusted section may be bendable in a defined manner, so that the geometrical continuous transition may be provided.

According to a further exemplary embodiment, the geometrically adjusted section is elastic. Thus, the geometrical continuous transition and/or the angle may be adjusted due to a defined wind (fluid) force. I.e. if a certain predetermined wind force acts on the rotor blade, a predetermined deflection of the geometrically adjusted section may be provided.

According to a further exemplary embodiment, the width of the rotor blade increases from the fixing section to the root end. Thus, the surface of the blade may be smaller in the region of the fixing section as in the region of the metric transition region, i.e. in the area of the root end and thus in the geometrically adjusted section.

According to a further exemplary embodiment of the horizontal axis wind turbine, the guide panel comprises an extending direction that is parallel to the rotary axis.

According to a further exemplary embodiment, the guide panel comprises the extending direction, wherein the radial distance from the guide panel to the rotary axis increase along the extending direction.

Under the extending direction of the guide panel the direction may be understood that directs from the root end of the rotor blade along a horizontal direction, for instance. By varying the radial distance of the guide panel to the rotary axis along the extending direction, the pressure of the fluid in the stator may be adjusted and e.g. a suction effect of the stator may be adjusted.

According to a further exemplary embodiment of the horizontal axis wind turbine, the guide panel comprises an end section located at the furthermost distance along the extending direction with respect to the rotor blade. The end section provides a tapered shape. Thus, the exhaust of the fluid out of the stator may be controlled so that turbulence of the fluid occur which may affect negatively the rotation of the rotor blade. With the tapered end section of the guide panels a controlled and constant exhaust of the fluid may be provided. According to a further exemplary embodiment of the horizontal axis wind turbine, the fixing section is fixed to the rotary shaft outside of the stator in an upstream direction along the shaft. Thus, it is ensured, that the rotation of the rotor blade first effects the streaming of the fluid and not the stator. Thus, the rotation of the rotor blade may control the fluid flow entering the diffuser due to the upstream fixation location outside of the diffuser. The flow-rate augmentation of the fluid is therefore controllable by the rotor rotation, so that an uncontrolled flow-rate augmentation generated by the diffuser may be prevented.

According to a further exemplary embodiment, the horizontal axis wind turbine further comprises a mounting structure. The rotating shaft and the stator are mounted to the mounting structure. The mounting structure holds the rotating shaft and the stator, so that the rotating shaft and the stator are pivotable around a vertical rotary axis. Thus, the horizontal axis wind turbine inclusively the stator and the rotor may be adjusted to a certain wind direction in order to increase the efficiency.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Fig. 1: shows a schematic view of an exemplary embodiment of a horizontal axis wind turbine comprising a ro- tor blade according to an exemplary embodiment of the invention;
- Fig. 2: illustrates a perspective view of the exemplary em- bodiment of Fig. 1;
- Fig. 3: shows a schematic view of a horizontal axis wind turbine according to an exemplary embodiment of the present invention;
- Fig. 4: illustrates a perspective view of the exemplary em- bodiment shown in Fig. 3;
- Fig. 5: shows a schematic view of a rotor blade according to an exemplary embodiment;
- Fig. 6: shows a schematic view of a rotor blade according to an exemplary embodiment of the invention;
- Fig. 7: shows a conventional horizontal axis wind turbine; and
- Fig. 8: illustrates a conventional horizontal axis wind turbine with a diffuser.

### Detailed Description

The illustration in the drawing is schematically. It is noted that in different figures, similar or identical elements are provided with the same reference signs or with reference signs, which are different from the corresponding reference signs only within the first digit.

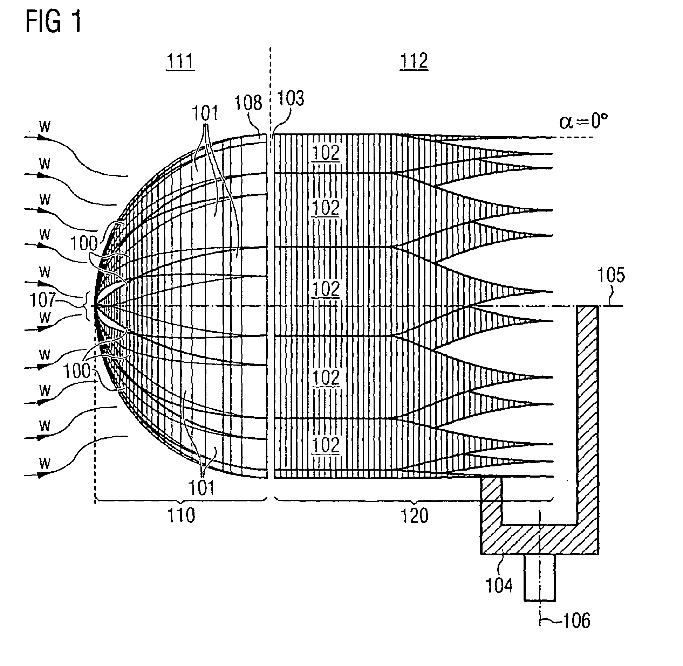

Fig. 1 shows a rotor blade 100 for a horizontal axis wind turbine. The rotor blade 100 comprises a fixing section 107 for fixing the rotor blade 100 to a rotary shaft 105 of a rotor 110 of the horizontal axis wind turbine. Furthermore, the rotor blade 100 comprises a geometrically adjusted section 101 and a root end 108. The rotor blade 100 extends from the fixing section 107 to the root end 108, wherein a section of the root end 108 of the geometrically adjusted section 101 and a section of a guide panel 102 of a stator 120 of the horizontal axis wind turbine closest to the root end 108 are substantially coplanar.

In the exemplary embodiment of Fig. 1, a (continuation) angle α is shown with a value of 0° (degree). I.e. the section of the root end 108 of the geometrically adjusted section 101 may be located in a same (coplanar and parallel) plane of a section of the guide panel 102 closest to the root end 108 and may be parallel to this section of the guide panel 102. Moreover, the guide panels 102 are located at a lee side 112 of the rotor blades 100, so that at the luff side 111 of the rotor blade 100 the guide panels 102 do not affect the fluid flow (e.g. the streamlines w). Thus, the stator 120 only affects the fluid flow at the lee side 112 of the rotor blades 100 (downstream of the rotor blades 100).

The rotor 110 may be adapted for rotating around a rotary shaft 105. To the rotary shaft 105 the rotor blade 100 may be attached. The stator 120 may comprise a plurality of guide panels 120 that are located around the rotary shaft 105 in a defined radial distance.

When wind flows along the streamlines w in a substantially horizontal direction or substantially parallel to the rotary shaft 105, the wind flows against the rotor blades 100. A part of the wind energy is transferred to mechanical energy which forces the rotor 110 to rotate around the rotary shaft 105. Another part of the wind flows through the rotor 100 in the direction to the stator 120.

Between the root end 108 of the rotor blade 100 and a further root end of the guide panels 102 (e.g. the section of the guide panel closest to the root end are substantially coplanar) a gap 103 may be provided, so that the rotor 110 may rotate relative to the stator 120 without friction. During operation both the rotor 110 and the stator 120 will be subjected to wind induced deflection, such as elastic deformations. Therefore, the gap 103 may be provided between the rotor 110 and the stator 120, so that a contact may be prevented. If the gap 103 provides a small gap size, turbulences of the wind flow f during the transition from the geometrically adjusted section 101 to the guide panels 102 may be prevented.

Furthermore, each of the rotor blades 100 provides a certain width a. In an exemplary embodiment the width a may increase along the extending direction of the rotor blades 100 starting from the fixing section 107 to the root end 108 of the geometrically adjusted section 101. Thus, the fluid flow may be bended more efficiently, so that stall of the wind from the rotor blades 100 is prevented.

Furthermore, Fig. 1 illustrates a plurality of the rotor blades 100 circularly around the rotary shaft 105. Each of the rotor blades 100 may provide a width a and each of the rotor blades 100 may overlap in a circumferential direction.

Furthermore, Fig. 1 illustrates a mounting structure 104 that holds the rotor 110 and the stator 120. The mounting structure 104 may be rotatable around a vertical rotary axis 106, so that the horizontal axis wind turbine may be adjusted to the wind direction, i.e. the direction of the streamlines w. Moreover, the fixing section 103 is fixed to the rotary shaft 105 outside of the stator 120 in an upstream direction along the shaft 105. Thus, due to the rotation of the rotor 110, a flow-rate augmentation may be controlled.

Furthermore, the guide panels 102 may provide a tapered end along the furthermost distance with respect to the rotor blades 100. Thus, the wind flow may be exhausted without generating turbulences.

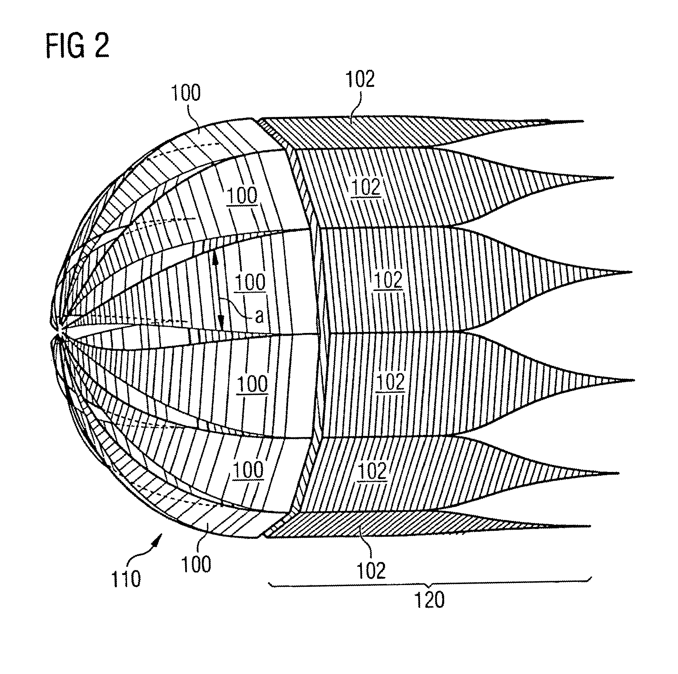

Fig. 2 illustrates a perspective view of the exemplary embodiment of Fig. 1.

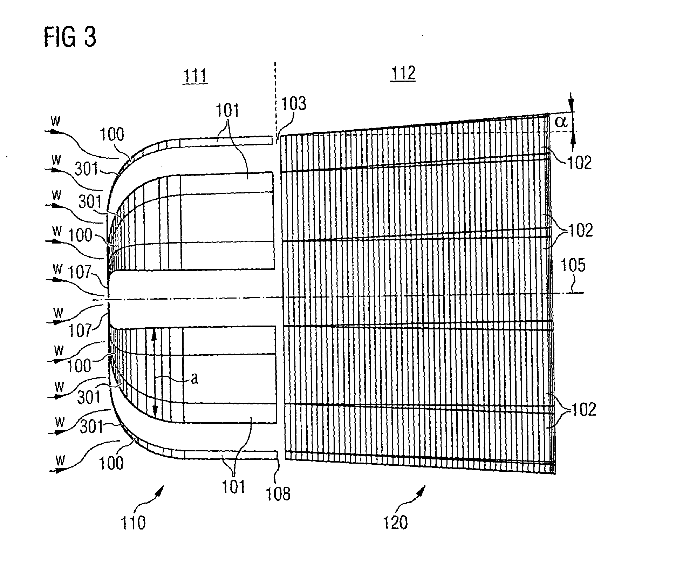

Fig. 3 illustrates a further exemplary embodiment of the present invention. The rotor blades 100 further comprise blade sections 301 that may extend perpendicular to the rotary shaft 105. The blade section 301 may be attached between the fixing section 107 and the geometrically adjusted section 101. The root end 108 of the geometrically adjusted section 101 may be geometrically adjusted to provide a geometrical continuous transition to the guide panels 102 of the stator 120. The geometrically adjusted section 101 may be attached to the blade section 301, such as winglets of an airfoil. Furthermore, the blade section 301 may provide different elastic characteristics in comparison to the geometrically adjusted section 101. Thus, the blade section 301 may be formed for instance stiff wherein the geometrically adjusted section 101 is elastic and deformable. When the geometrically adjusted section 101 is elastic, the forming of the geometrically adjusted section 101 may be relative to a certain strength of the wind force. Thus, by the use of an elastic geometrically adjusted section 101, the geometrical continuous transition and/or the angle α may be adjusted due to a certain wind strength.

Furthermore, the stator 120 provides guide panels 102 that overlap in circular direction. The guide panels 102 may increase their radial distance to the rotary shaft 105 along the extending direction or along the streamlines w. Thus, the wind that streams through the rotor 110 and through the stator 120 may be expanded continuously by the increasing radial distance of the guide panels 102 along the extending direction and not abruptly. Thus, turbulences and shocks at the end of the stator 120 may be prevented.

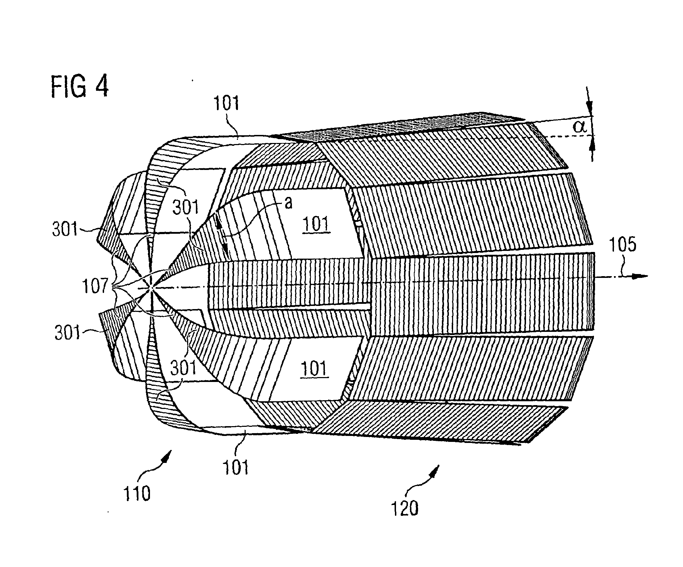

Fig. 4 illustrates a perspective view of the exemplary embodiment of Fig. 3.

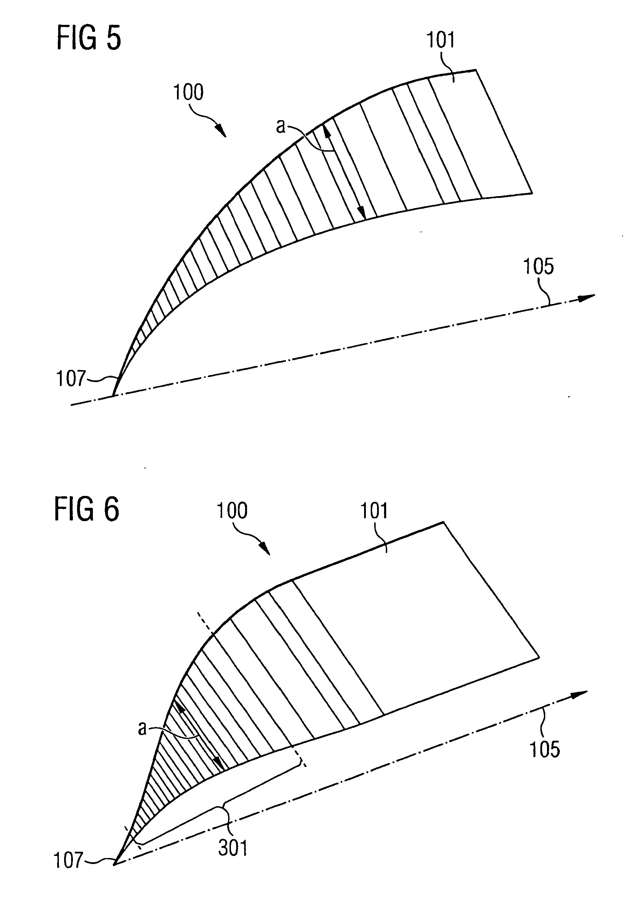

Fig. 5 illustrates a single rotor blade 100 that may be mounted to a rotor 110 as shown in the exemplary embodiment of Fig. 1 and Fig. 2. The rotor blade 100 comprises the geometrically adjusted section 101 that provides a continuously deformed shape starting from the fixing section 107 to the root end 108 of the blade 100. The geometrically adjusted section 101 may be elastic and therefore deformable by a predetermined wind flow that flows along the streamlines w.

Fig. 6 illustrates a rotor blade 100 that may be attached to a rotor 110 as shown in the exemplary embodiment of Fig. 3 or Fig. 4. The rotor blade 100 comprises a blade section 301 between the fixing section 107 and the geometrically adjusted section 101. Blade section 301 may be a rigid part in comparison to a flexible and elastic geometrically adjusted section 101.

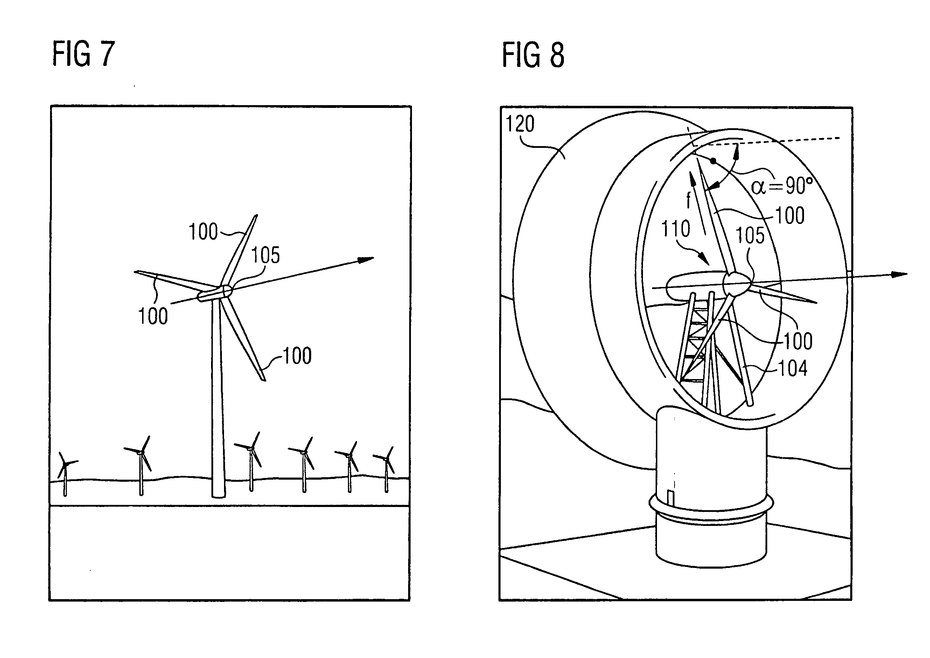

Fig. 7 illustrates a conventional horizontal axis wind turbine including three rotor blades 100. The rotor blades 100 are mounted to the rotary shaft 105.

Fig. 8 illustrates a conventional horizontal axis wind turbine with a stator 120 (diffuser). The rotor 110 comprises three rotor blades 100 pivotable around a rotary shaft 105. The plane of the guide panel of the stator 120 is parallel to the rotary shaft 105. It is shown that the plane along the extending direction of the root end 108 of the blades 100 points perpendicular to the plane along the extending direction of the stator 120. With other words, the plane of the rotor blade 100 provides an angle α to the plane of the rotor 120 of 90°. Thus, the transition of the streaming of the rotor blade 100 panel of the stator 120 is not geometrical continuous and a geometrical continuous transition may not possible, so that turbulences occur. Furthermore, the stator 120 affects the wind flow already at the luff side of the rotor blades 100. Thus, the wind flowing through the stator 120 provides a flow rate speed up through the rotor even if the rotor is not in operation.

## Claims

1. A horizontal axis wind turbine comprising
a rotor blade (100) with a fixing section (107) and a geometrically adjusted section (101),
wherein the geometrically adjusted section (101) comprises a root end (108), the root end (108) being spaced in a radial distance from the rotary shaft (105),
a stator (120) with a guide panel (102), and
a rotary shaft (105) and being **characterised in that**
the fixing section (107) of the rotor blade (100) is attached to the rotary shaft (105) for being rotatable around the rotary axis of the rotary shaft (105),
wherein a section of the guide panel (102) closest to the root end (108) is spaced in the same radial distance from the rotary shaft (105), and
wherein a plane of the root end (108) and a plane of the section of the guide panel (102) closest to the root end (108) are coplanar.

2. The horizontal axis wind turbine of claim 1,
wherein the geometrically adjusted section (101) is geometrically adjustable for forming a geometrical continuous transition to the guide panel (102), so that a bound vorticity generated by the rotation of the rotor blade (100) is transferrable to the guide panel (102).

3. The horizontal axis wind turbine of claim 1 or 2,
wherein the rotor blade (100) further comprises
a blade section (301) located between the fixing section (107) and the geometrically adjusted section (101).

4. The horizontal axis wind turbine of claim 3,
wherein the blade section (301) is a rigid part in comparison to a flexible and elastic geometrical adjusted section (101).

5. The horizontal axis wind turbine of one of claims 1 to 4,
wherein the geometrically adjusted section (101) is elastic.

6. The horizontal axis wind turbine of one of claims 1 to 5,
wherein the width (a) of the rotor blade (100) increases from the fixing section (107) to the root end.

7. The horizontal axis wind turbine of one of the claims 1 to 6,
wherein the guide panel (102) comprises an extending direction that is parallel to the rotary axis.

8. The horizontal axis wind turbine of one of the claims 1 to 6,
wherein the guide panel (102) comprises the extending direction,
wherein the radial distance of the guide panel (102) to the rotary axis increases along the extending direction.

9. The horizontal axis wind turbine of one of the claims 1 to 8,
wherein the guide panel (102) comprises an end section located at the furthermost distance along the extending direction with respect to the rotor blade (100),
wherein the end section provides a tapered shape.

10. The horizontal axis wind turbine of one of the claims 1 to 9,
wherein the fixing section (103) is fixed to the rotary shaft (105) outside of the stator (120) in an upstream direction along the shaft (105).

11. The horizontal axis wind turbine of one of the claims 1 to 10, further comprising
a mounting structure (104),
wherein the rotary shaft (105) and the stator (120) is mounted to the mounting structure (104),
wherein the mounting structure (104) holds the rotary shaft (105) and the stator (120), so that the rotary shaft (105) and the stator (120) are pivotable around a vertical rotary axis (106).

## Patentansprüche

1. Windkraftanlage mit horizontaler Achse, welche umfasst:
ein Rotorblatt (100) mit einem Befestigungsabschnitt (107) und einem geometrisch angepassten Abschnitt (101),
wobei der geometrisch angepasste Abschnitt (101) ein Fußende (108) umfasst, wobei das Fußende (108) von der Drehwelle (105) einen radialen Abstand aufweist,
einen Stator (120) mit einer Führungsplatte (102), und
eine Drehwelle (105), und
**dadurch gekennzeichnet, dass** der Befestigungsabschnitt (107) des Rotorblatts (100) derart an der Drehwelle (105) befestigt ist, dass er um die Drehachse der Drehwelle (105) drehbar ist,
wobei ein Abschnitt der Führungsplatte (102), der dem Fußende (108) am nächsten ist, denselben radialen Abstand von der Drehwelle (105) aufweist, und
wobei eine Ebene des Fußendes (108) und eine Ebene des Abschnitts der Führungsplatte (102), der dem Fußende (108) am nächsten ist, koplanar sind.

2. Windkraftanlage mit horizontaler Achse nach Anspruch 1,
wobei der geometrisch angepasste Abschnitt (101) geometrisch so anpassbar ist, dass ein geometrisch kontinuierlicher Übergang zu der Führungsplatte (102) gebildet wird, so dass ein gebundener Wirbel, der durch die Rotation des Rotorblatts (100) erzeugt wird, auf die Führungsplatte (102) übertragbar ist.

3. Windkraftanlage mit horizontaler Achse nach Anspruch 1 oder 2,
wobei das Rotorblatt (100) ferner umfasst:
einen Blattabschnitt (301), der zwischen dem Befestigungsabschnitt (107) und dem geometrisch angepassten Abschnitt (101) angeordnet ist.

4. Windkraftanlage mit horizontaler Achse nach Anspruch 3,
wobei der Blattabschnitt (301) ein starrer Teil ist, im Vergleich zu einem flexiblen und elastischen geometrisch angepassten Abschnitt (101).

5. Windkraftanlage mit horizontaler Achse nach einem der Ansprüche 1 bis 4,
wobei der geometrisch angepasste Abschnitt (101) elastisch ist.

6. Windkraftanlage mit horizontaler Achse nach einem der Ansprüche 1 bis 5,
wobei die Breite (a) des Rotorblatts (100) vom Befestigungsabschnitt (107) zum Fußende hin zunimmt.

7. Windkraftanlage mit horizontaler Achse nach einem der Ansprüche 1 bis 6,
wobei die Führungsplatte (102) eine Erstreckungsrichtung aufweist, welche parallel zu der Drehachse ist.

8. Windkraftanlage mit horizontaler Achse nach einem der Ansprüche 1 bis 6,
wobei die Führungsplatte (102) die Erstreckungsrichtung aufweist,
wobei der radiale Abstand der Führungsplatte (102) von der Drehachse entlang der Erstreckungsrichtung zunimmt.

9. Windkraftanlage mit horizontaler Achse nach einem der Ansprüche 1 bis 8,
wobei die Führungsplatte (102) einen Endabschnitt umfasst, der sich im größten Abstand entlang der Erstreckungsrichtung bezüglich des Rotorblatts (100) befindet,
wobei der Endabschnitt eine konisch zulaufende Form aufweist.

10. Windkraftanlage mit horizontaler Achse nach einem der Ansprüche 1 bis 9,
wobei der Befestigungsabschnitt (103) an der Drehwelle (105) außerhalb des Stators (120) in einer stromaufwärtigen Richtung entlang der Welle (105) befestigt ist.

11. Windkraftanlage mit horizontaler Achse nach einem der Ansprüche 1 bis 10, welche ferner umfasst:
eine Tragkonstruktion (104),
wobei die Rotorwelle (105) und der Stator (120) an der Tragkonstruktion (104) angebracht sind,
wobei die Tragkonstruktion (104) die Rotorwelle (105) und den Stator (120) derart hält, dass die Rotorwelle (105) und der Stator (120) um eine vertikale Drehachse (106) schwenkbar sind.

## Revendications

1. Éolienne à axe horizontal comprenant
une pale de rotor (100) avec une section de fixation (107) et une section géométriquement ajustée (101),
dans laquelle la section géométriquement ajustée (101) comprend une extrémité d'emplanture (108), l'extrémité d'emplanture (108) étant espacée d'une distance radiale de l'arbre rotatif (105),
un stator (120) avec un panneau de guidage (102), et
un arbre rotatif (105),
et étant **caractérisée en ce que** la section de fixation (107) de la pale de rotor (100) est fixée à l'arbre rotatif (105) pour être rotative autour de l'axe de rotation de l'arbre rotatif (105),
dans laquelle une section du panneau de guidage (102) la plus proche de l'extrémité d'emplanture (108) est espacée de la même distance radiale de l'arbre rotatif (105), et
dans laquelle un plan de l'extrémité d'emplanture (108) et un plan de la section du panneau de guidage (102) la plus proche de l'extrémité d'emplanture (108) sont coplanaires.

2. Éolienne à axe horizontal selon la revendication 1,
dans laquelle la section géométriquement ajustée (101) est géométriquement ajustable pour former une transition géométrique continue jusqu'au panneau de guidage (102), de sorte qu'un tourbillon attaché généré par la rotation de la pale de rotor (100) est transférable au panneau de guidage (102).

3. Éolienne à axe horizontal selon la revendication 1 ou 2, dans laquelle la pale de rotor (100) comprend en outre
une section de pale (301) située entre la section de fixation (107) et la section géométriquement ajustée (101).

4. Éolienne à axe horizontal selon la revendication 3,
dans laquelle la section de pale (301) est une partie rigide par rapport à une section géométriquement ajustée (101) flexible et élastique.

5. Éolienne à axe horizontal selon l'une des revendications 1 à 4,
dans laquelle la section géométriquement ajustée (101) est élastique.

6. Éolienne à axe horizontal selon l'une des revendications 1 à 5,
dans laquelle la largeur (a) de la pale de rotor (100) augmente de la section de fixation (107) jusqu'à l'extrémité d'emplanture.

7. Éolienne à axe horizontal selon l'une des revendications 1 à 6,
dans laquelle le panneau de guidage (102) comprend un sens d'extension qui est parallèle à l'axe de rotation.

8. Éolienne à axe horizontal selon l'une des revendications 1 à 6,
dans laquelle le panneau de guidage (102) comprend le sens d'extension,
dans laquelle la distance radiale du panneau de guidage (102) jusqu'à l'axe de rotation augmente le long du sens d'extension.

9. Éolienne à axe horizontal selon l'une des revendications 1 à 8,
dans laquelle le panneau de guidage (102) comprend une section d'extrémité située à la distance la plus éloignée le long du sens d'extension par rapport à la pale de rotor (100),
dans laquelle la section d'extrémité offre une forme en cône.

10. Éolienne à axe horizontal selon l'une des revendications 1 à 9,
dans laquelle la section de fixation (103) est fixée sur l'arbre rotatif (105) à l'extérieur du stator (120) dans un sens vers l'amont le long de l'arbre (105).

11. Éolienne à axe horizontal selon l'une des revendications 1 à 10, comprenant en outre
une structure de montage (104),
dans laquelle l'arbre rotatif (105) et le stator (120) sont montés sur la structure de montage (104),
dans laquelle la structure de montage (104) maintient l'arbre rotatif (105) et le stator (120), de sorte que l'arbre rotatif (105) et le stator (120) peuvent pivoter autour d'un axe de rotation vertical (106).
